# EUROPEAN PATENT SPECIFICATION

(11) **EP 3 427 923 B1**
(45) Date of publication and mention of the grant of the patent: **07.08.2019**
(21) Application number: 17187223.7
(22) Date of filing: 22.08.2017
(51) Int. Cl.: B29C 64/165, B29C 64/255, B29C 64/321, B33Y 30/00, B33Y 40/00

(54) **3D PRINTER**
3D-DRUCKER
IMPRIMANTE 3D

(30) Priority: 13.07.2017 CN 201710571108
(43) Date of publication of application: 16.01.2019
(73) Proprietor: XYZprinting, Inc., New Taipei City 22201 (TW); Kinpo Electronics, Inc., New Taipei City 22201 (TW)
(72) Inventor: CHAO, Yi-Yi, 22201 SHENKENG DIST., NEW TAIPEI CITY (TW); HU, Chih-Chieh, 22201 SHENKENG DIST., NEW TAIPEI CITY (TW)
(74) Representative: 2K Patentanwälte Blasberg Kewitz & Reichel

(56) References cited:
- JP-A- 2016 221 875
- US-A1- 2013 064 707

## Description

### BACKGROUND OF THE INVENTION

### Technical Field

The present disclosure relates to a 3D printer, in particular to a 3D printer having a covering case.

### Description of Related Art

The present disclosure relates to a powder bed binding 3D printer. The 3D printer spreads a layer of powders on a platform firstly and drops binder on the powder by use of a nozzle, and a selective part of the powders is thereby solidified to form a stack piece. Then, the 3D printer spreads another layer of powders on the stack piece and drops binder again on the powder by use of nozzle to bind the powders. Finally, the unbound powders are recycled and the bound stack pieces are stacked to form a model. The operation environment is usually dusty because of flying powders, and filling, recycling and transporting process of the powders are inconvenient.

In views of this, in order to solve the above disadvantage, the present inventor studied related technology and provided a reasonable and effective solution in the present disclosure.

Document US-A-20130064707 discloses a 3D printer in accordance with the preamble of claim 1.

### SUMMARY

A 3D printer having a covering case is provided in the present disclosure.

A 3D printer including two tanks, a powder spreading mechanism and a transport assembly is provided in the present disclosure. The tank opening is defined on a top of each tank, and an elevating mechanism is arranged in each tank and able to move between the tank opening and a bottom of the corresponding tank. The powder spreading mechanism is arranged corresponding to the tank openings and able to move across an area defined by the tank openings, one of the tanks contains powders for supplying the powders, and the powder spreading mechanism pushes the powders into the tank opening of the other tank for a modeling process. The transport assembly includes a carrying plate and a covering case, the carrying plate is detachably arranged on the elevating mechanism in the tank for supplying the powders, a plurality of insertion holes are defined at an edge of the carrying plate, a case opening is defined at a bottom of the covering case, the covering case covers on the corresponding tank opening and the tank opening is communicated with the case opening, the case opening is of a shape corresponding to the carrying plate, a plurality of movable latches for correspondingly inserted in the respective insertion holes are arranged at an edge of the case opening, and the powders are allowed to be contained in the covering case when the case opening is closed by the carrying plate.

According to the 3D printer of the present disclosure, a binding nozzle is arranged corresponding to the couple of tanks, and the binding nozzle is able to move across an area defined by the tank opening for modeling. The powder spreading mechanism includes a roller, and the roller is able to move across an area defined by the respective tank openings. A feeding hole is defined on a top of the covering case.

According to the 3D printer of the present disclosure, at least an elastic reset member is arranged on the covering case, each movable latch is linked with the corresponding elastic reset member, so as to be moved by the corresponding elastic reset member and to be inserted into the corresponding insertion hole. According to the 3D printer of the present disclosure, the tank openings are arranged on the same horizontal plane. The 3D printer of the present disclosure further includes another carrying plate arranged on the other elevating mechanism. The case opening is of a shape corresponding to the respective carrying plates. The respective carrying plates are of the same shape. According to the 3D printer of the present disclosure, the respective carrying plates are of shapes different from each other, the transport assembly further includes another covering case having another case opening, and the respective case openings are of shapes corresponding to the respective carrying plates.

According to the 3D printer of the present disclosure, the powders are easy to be transported by the carrying plate and the covering case, it is therefore convenient to supply powders into one of the tanks before a modeling process and to remove excess powders from the other tank after the modeling process. Furthermore, the 3D printer of the present disclosure is allowed to transport the powders by a close container and the powders are thereby prevented from causing flying dust.

### BRIEF DESCRIPTION OF DRAWING

The present disclosure can be more fully understood by reading the following detailed description of the embodiment, with reference made to the accompanying drawings as follows:
Fig. 1 is a schematic view showing the 3D printer of according to one embodiment of the present disclosure.
Fig. 2 is a schematic view showing the transport assembly of the 3D printer according to one embodiment of the present disclosure.
Figs. 3 and 4 are schematic views showing the covering case of the 3D printer according to one embodiment of the present disclosure.
Figs. 5 and 9 are schematic views showing the assembled transport assembly of the 3D printer according to the embodiment of the present disclosure.
Figs. 10 to 15 are schematic views showing an operation condition of the 3D printer according to one embodiment of the present disclosure.

### DETAILED DESCRIPTION

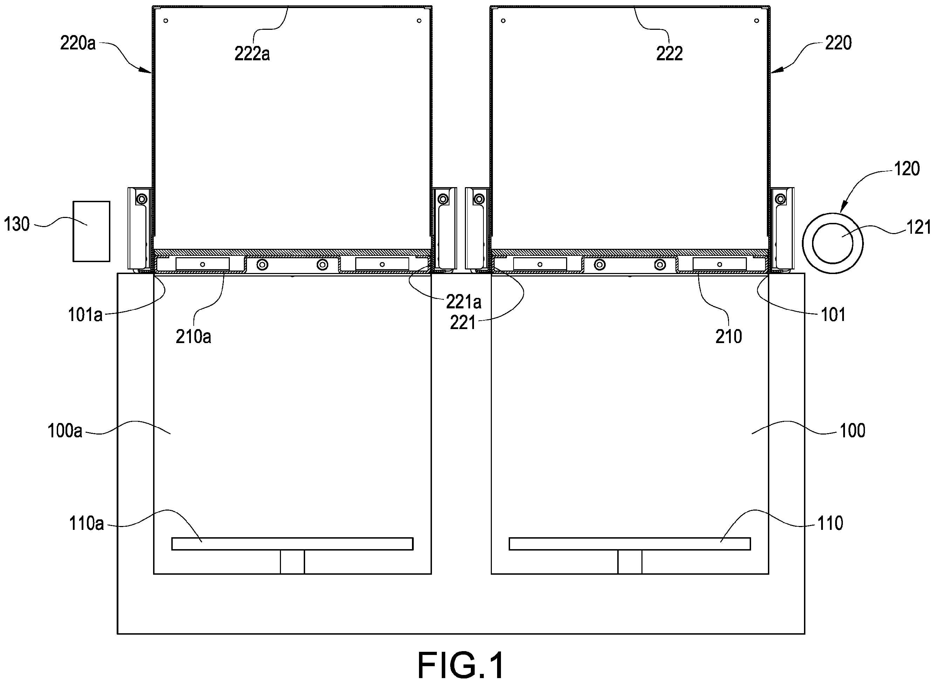

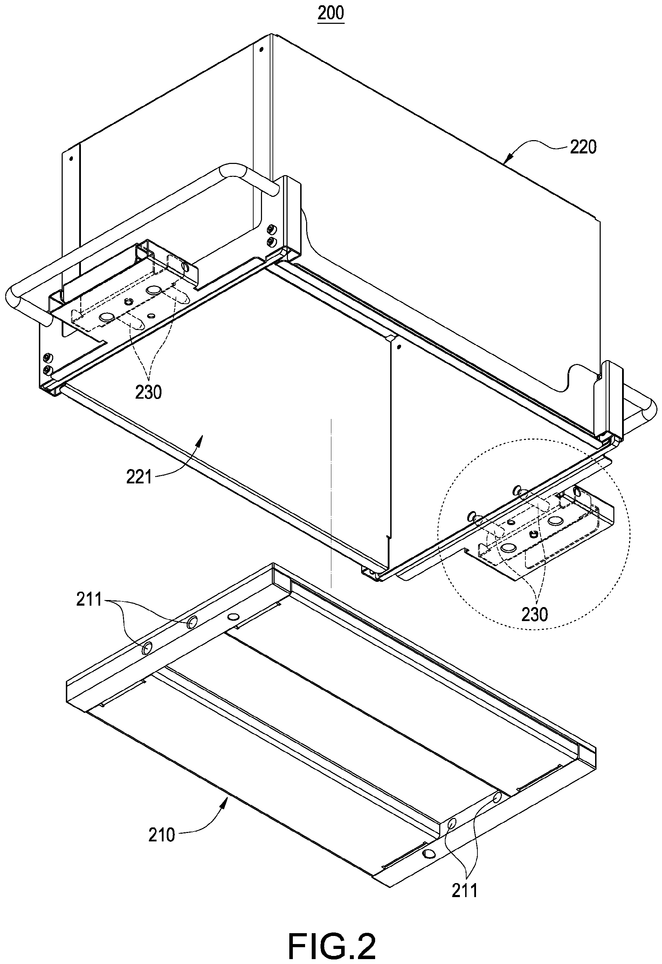

According to Figs. 1 and 2, a 3D printer including two tanks 100/100a, a powder spreading mechanism 120, a binding nozzle 130 and a transport assembly 200 is provided in an embodiment of the present disclosure. Wherein, the transport assembly 200 includes at least a carrying plate 210(210a) and at least a covering case 220(220a).

Each tanks 100/100a is used for containing powders 10 for a modeling process, a tank opening 101/101a is defined on a top of each tank 100/100a. In the present embodiment, the tank openings 101/101a are preferably arranged in the same horizontal plane, but scope of the present disclosure should not be limited to the embodiment, the respective tank openings 101/101a could be alternatively arranged in different horizontal planes. An elevating mechanism 110/110a is arranged in each tank 100/100a and the respective elevating mechanisms 110/110a are able to move between a bottom and the tank opening 101/101a of the respective tanks 100/100a.

Each carrying plate 210/210a is detachably arranged on one of the elevating mechanisms 110/110a. In the present disclosure, preferably, a carrying plate 210/210a is disposed on each elevating mechanism 110/110a. In the present disclosure, the two carrying plates 210/210a are preferably of the same shape, only one of the carrying plates 210 is described following, but scope of the present disclosure should not be limited to the embodiment. Alternatively, the carrying plates 210/210a of shapes different from each other could be arranged on respective elevating mechanisms 110/110a.

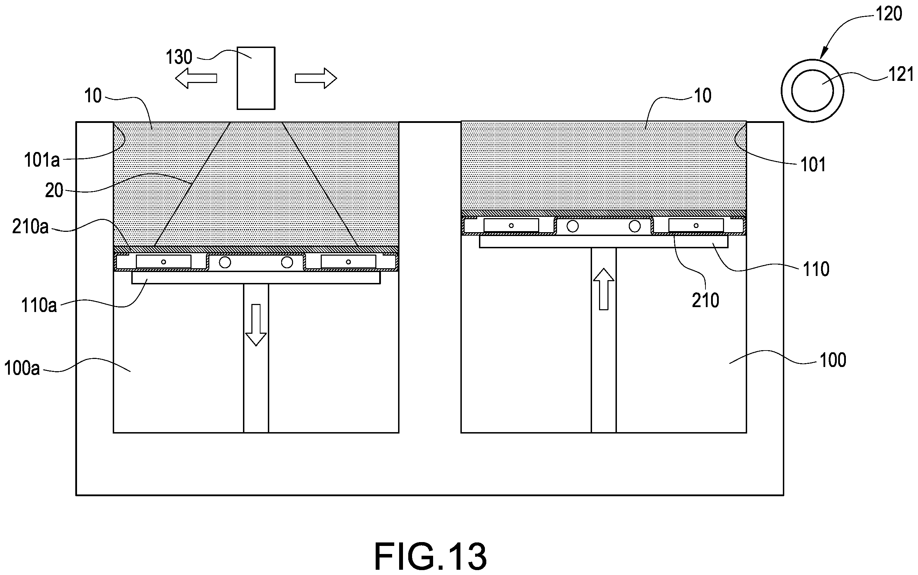

According to Figs. 2 and 13, multiple insertion holes 211 are defined on an edge of the carrying plate 210, the carrying plate 210 is contained in the corresponding tank 100 and contacted with an internal wall of the tank 100, and the carrying plate 210 is used for supporting the powders 10 contained in the tank 100.

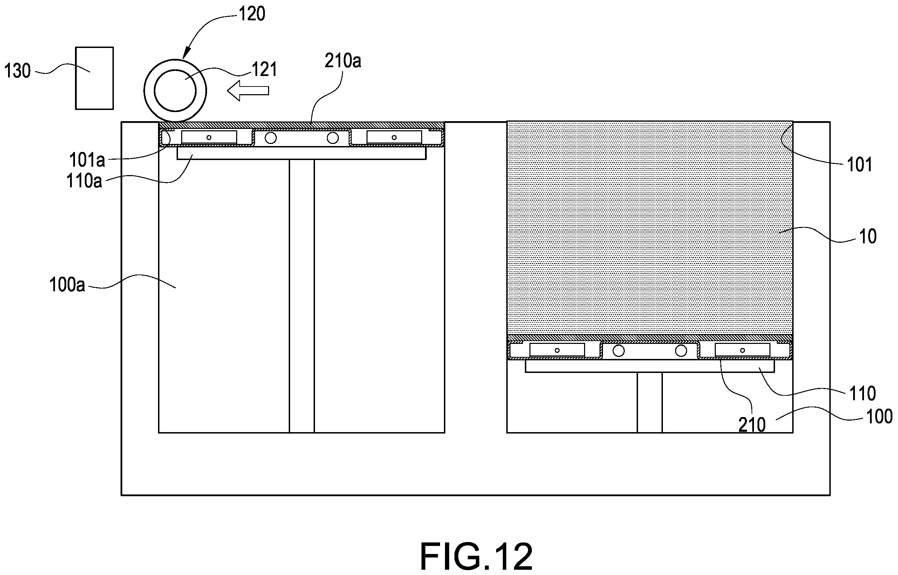

According to Figs. 1 and 12, the powder spreading mechanism 120 is arranged corresponding to respective tank openings 101/101a and able to move across an area defined by the tank openings 101/101a. In the present embodiment, the powder spreading mechanism 120 preferably includes a roller 121, and the roller 121 is able to move across the area defined by the tank openings 101/101a. Thereby, the powders 10 in one of the tank openings 101 are able to be pushed into the other tank opening 101a for a modeling process. According to the present disclosure, at least a carrying plate 210a is arranged in the tank 100a for modeling of the two tanks 100/100a; and the other tank 100 is used for powder supplying. Another carrying plate 210 could be selectively arranged in the tank 100 for powder supplying.

According to Figs. 1 and 13, the binding nozzle 130 is arranged corresponding to the tank 100a for modeling, the binding nozzle 130 is able to move, and the binding nozzle 130 is limited to move within an area defined by the tank opening 101a of this tank 100a. Thereby, the binding nozzle 130 could be used for binding the powders 10 contained in the corresponding tank opening 101a. While the 3D printer of the present disclosure is operated, the elevating mechanism 110a in the tank 100a for modeling rises the carrying plate 210a thereon to the tank opening 101a of this tank 100a. The tank 100 for powder supplying is filled with powders 10, the roller 121 is moved to push the powders 10 in the tank opening 101 of the tank 100 for powder supplying into the tank opening 101a of the tank 100a for modeling and bulldoze to form a layer on the carrying plate 210a in the tank 100a for modeling. The binding nozzle 130 binds a selective part in this layer of powders 10 to form a stack piece, and the elevating mechanism 110a in the tank 100a for modeling subsequently descends the carrying plate 210a thereon to descend the stack piece. A step difference is thereby formed between the stack piece and the tank opening 101a of the tank 100a for modeling, and powders 10 are therefore allowed to be spread on the stack piece. The elevating mechanism 110 in the tank 100 for powder supplying rises the carrying plate 210 thereon to rise the powders 10 contained in the tank 100 for powder supplying over the tank opening 101 of the tank 100, and the powders 10 are thereby supplied to the powder spreading mechanism 120 and spreaded in the tank 100a for modeling.

According to Fig. 1, two covering cases 220/220a of the same shape are arranged corresponding to respective tanks 100/100a in the present embodiment, alternatively single covering case 220a could be arranged corresponding to single carrying plate 210a arranged in the tank 100a for modeling. A case opening 221/221a is defined on a bottom of each covering case 220/220a, the respective tank openings 101/101a are covered by corresponding covering cases 220/220a, and each tank opening 101/101a is communicated with the corresponding case opening 221/221a, each case opening 221/221a is of a shape matching the corresponding carrying plate 210/210a, each covering case 220/220a is therefore able to be assembled with the corresponding carrying plate 210/210a and allowed to contain the powders 10 therein for transport. In the present embodiment, the two carrying plates 210/210a are of the same shape, in fact, single covering case 200 could be selectively assembled with any of the carrying plates 210/210a. When two carrying plates 210/210a of shapes different from each other are arranged, multiple covering cases 220/220a corresponding to respective carrying plates 210/210a are required.

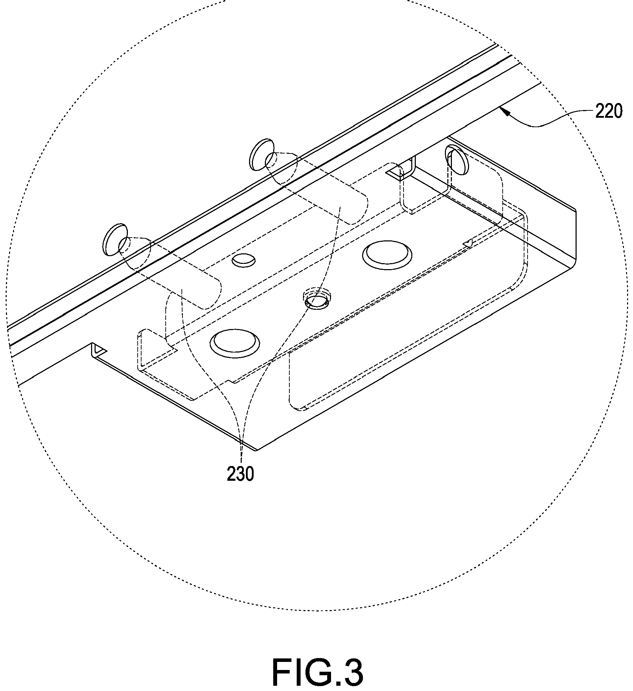

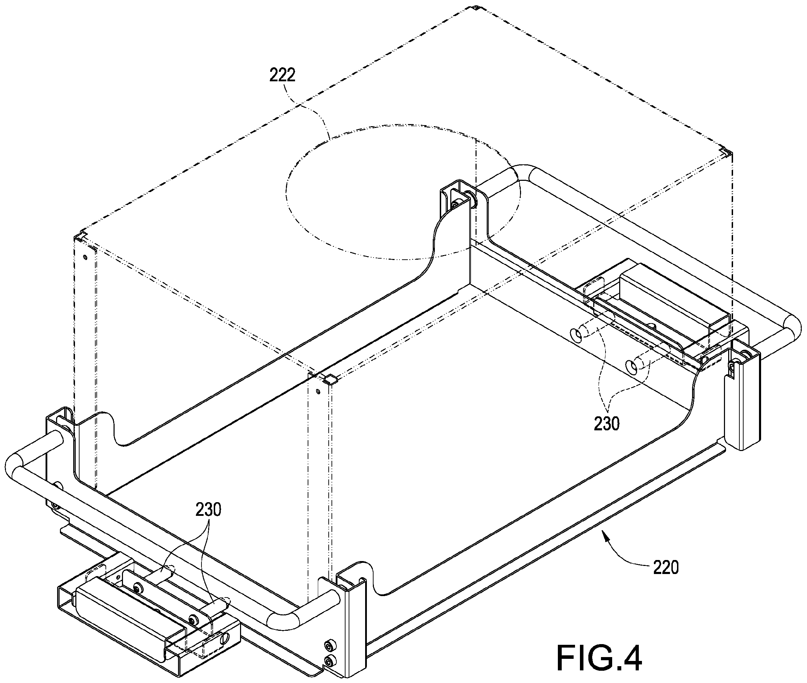

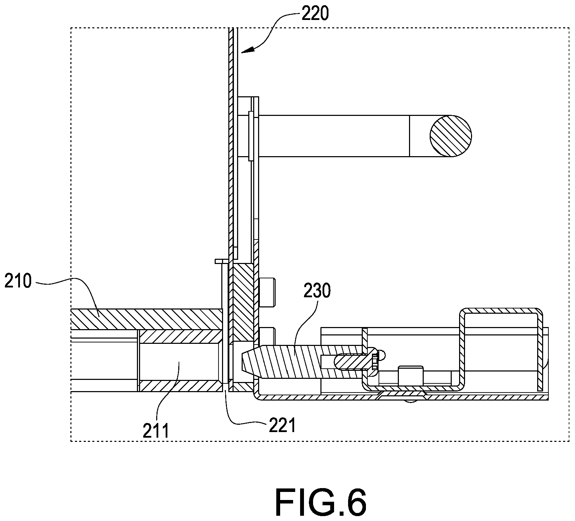

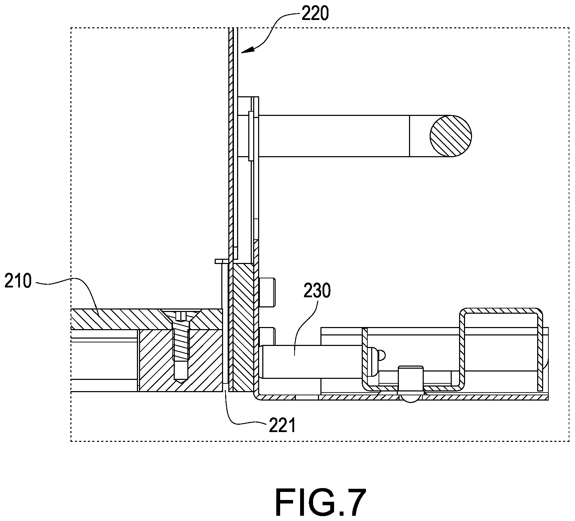

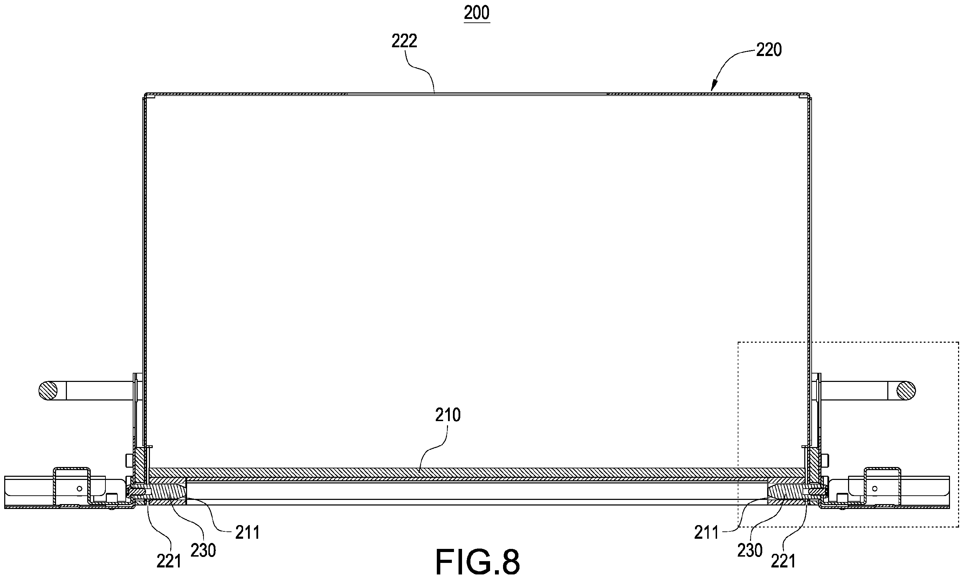

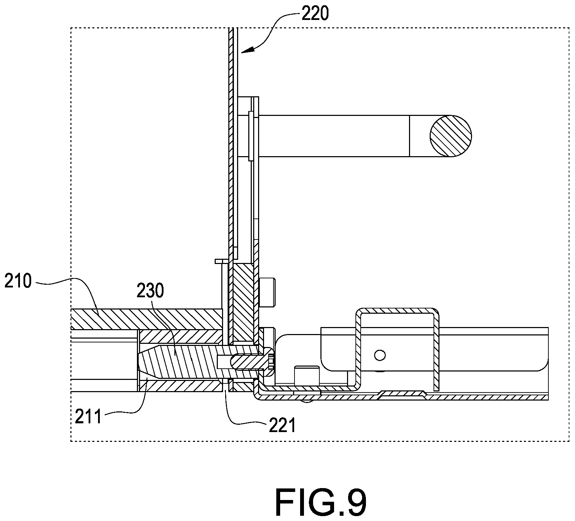

According to Figs. 2 to 9, only one of the covering cases 220 is described following. Multiple movable latches 230 for inserting the corresponding insertion holes 211 are arranged at an opening edge of the case opening 221, and the covering case 220 could be assembled with or released from the carrying plate 210 by the movable latch 230. According to the 3D printer of the present disclosure, at least an elastic reset member (not show in Figs.) could selectively and added on the covering case 220, each movable latch 230 is connected with the corresponding elastic reset member so as to be moved by the corresponding elastic reset member and able to be inserted into the corresponding insertion hole 211, and it is therefore convenient for an operator. The powders 10 could be transported via a covering case 220 assembled with a carrying plate 210 according to following description.

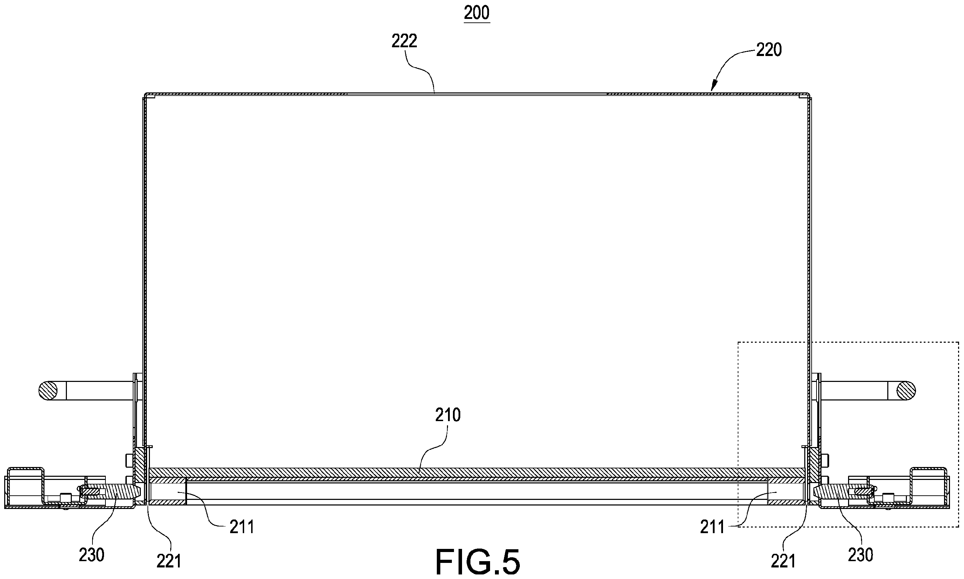

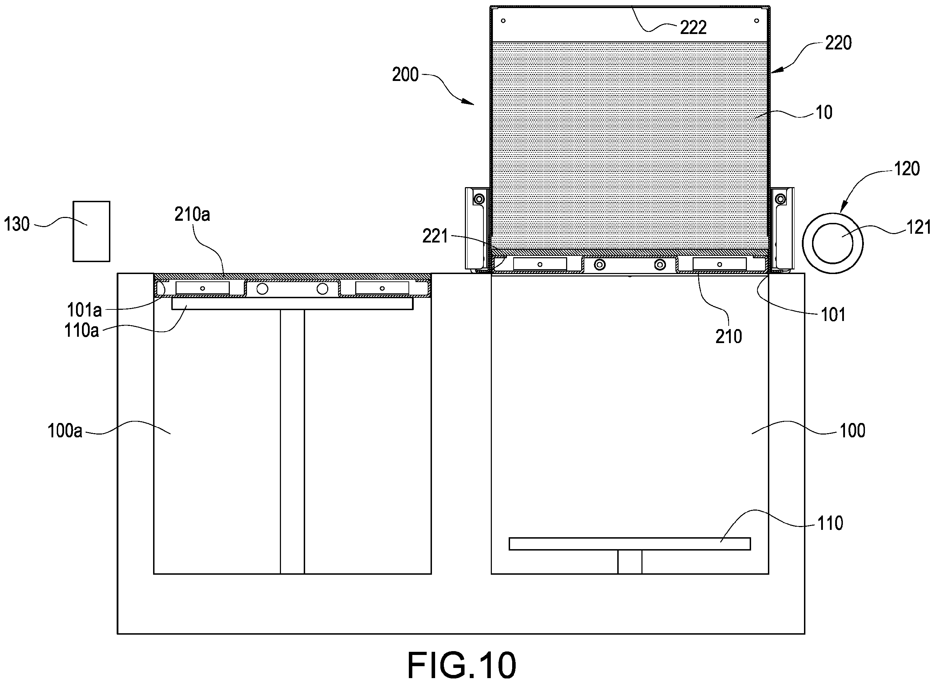

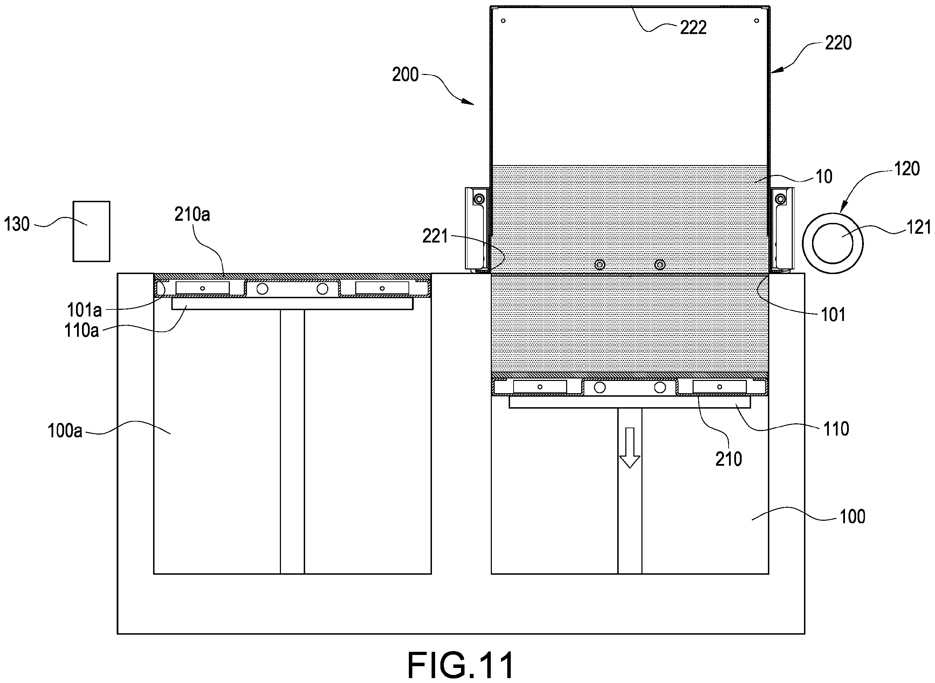

According to Figs. 5 to 12, in an operation of feeding the powders 10 into the tank 100, the covering case 220 is firstly assembled with the carrying plate 210 and therefore closed, then the powders 10 is fed into the covering case 220. A feeding hole 222 could be selectively defined on a top of the covering case 220 for feeding the powders 10. Subsequently, the covering case 220 filled with the powders 10 is disposed on the tank opening 101 of the tank 100 for powder supplying and the elevating mechanism 110 therein rises to support the carrying plate 210. The carrying plate 210 is released by retreating the movable latch 230, then the elevating mechanism 110 descends to bring the carrying plate 210 into the tank 100 for powder supplying. The carrying plate 210 and the powders 10 carried thereon are thereby dumped into the tank 100. A powder spreading process could be operated by the powder spreading mechanism 120 after removing the covering case 220.

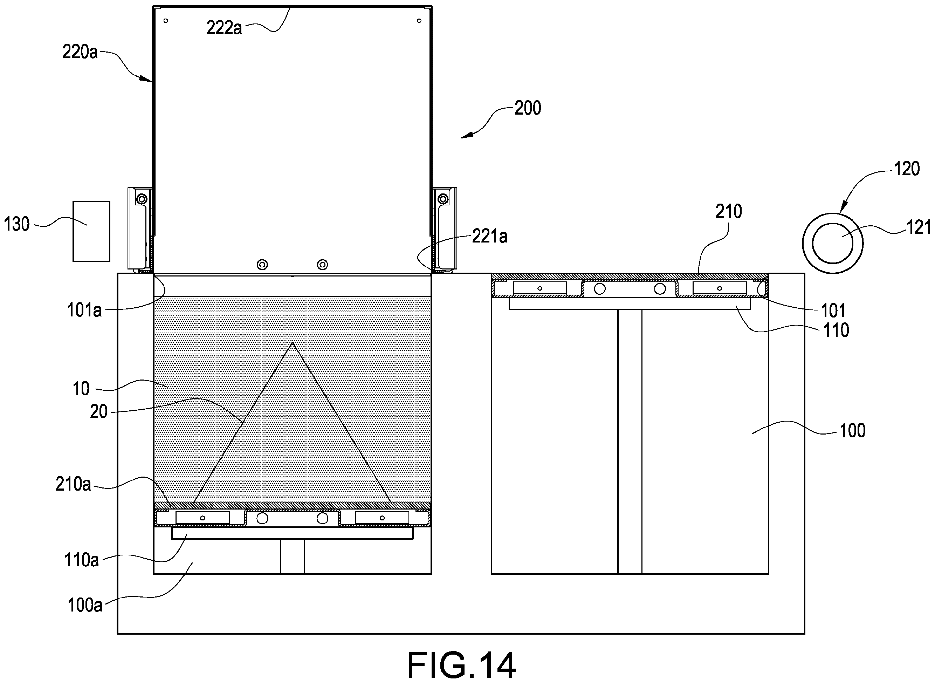

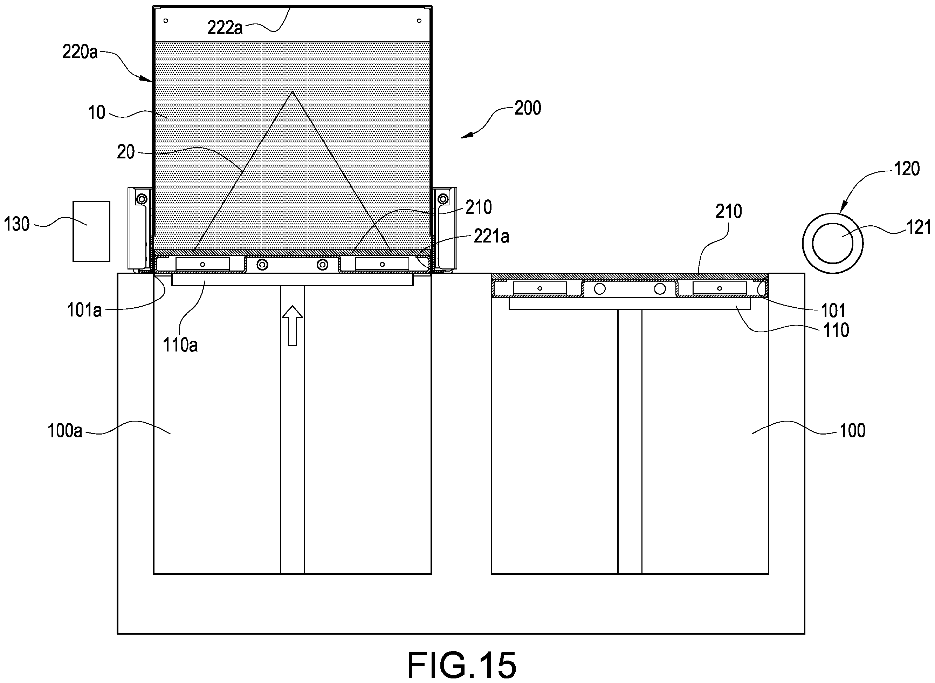

According to figs. 5 to 9, 14 and 15, a complete model 20 is bound on the carrying plate 210a in the tank 100a for modeling, and the model 20 is contained in the tank 100a for modeling and buried in the excess powders 10. the covering case 220a is disposed on and cover the and opening 101a of the tank 100a for modeling, and the elevating mechanism 110a in the tank 100a for modeling rises to elevate the carrying plate 210a to the tank opening 101a of the tank 100a for modeling and the carrying plate 210a moves the model 20 thereon and the excess powders 10 into the covering case 220a. The model 20 and the excess powders 10 could be removed from the 3D printer after closing the covering case 220a by assembling with the carrying plate 210a.

According to the 3D printer of the present disclosure, the powders 10 are easy to be transported by the carrying plate 210/210a and the covering case 220/220a, it is therefore convenient to supply powders 10 into tank 100 before a modeling process and to remove excess powders 10 from the tank 100 after the modeling process. Furthermore, the 3D printer of the present disclosure is allowed to transport the powders 10 by a close container and the powders 10 are thereby prevented from causing flying dust.

## Claims

1. A 3D printer, comprising:
two tanks (100/100a), a tank opening (101/101a) being defined on a top of each tank (100/100a), and an elevating mechanism (110/110a) being arranged in each tank (100/100a) and movable between the tank opening (101/101a) and a bottom of the corresponding tank (100/100a);
a powder spreading mechanism (120) arranged corresponding to the tank openings (101/101a) and being movable across an area defined by the tank openings (101/101a), one of the tanks (100) contains powders (10) for supplying the powders (10), and the powder spreading mechanism (120) pushes the powders (10) into the tank opening (101a) of the other tank (100a) for a modeling process; and
a transport assembly (200) comprising a carrying plate (210), **characterized in that** the transport assembly (200) further comprises a covering case (220), the carrying plate (210) being detachably arranged on the elevating mechanism (110) in the tank (100) for supplying the powder, a plurality of insertion holes (211) being defined at an edge of the carrying plate (210), a case opening (221) being defined at bottom of the covering case (220), the covering case (220) covering on the corresponding tank opening (101) and the tank opening (101) being communicated with the corresponding case opening (221), the case opening (221) being of a shape corresponding to the carrying plate (210), a plurality of movable latches (230) for being correspondingly inserted in the respective insertion holes (211) being arranged at an edge of the case opening (221), and the powders (10) being allowed to be contained in the covering case (220) when the case opening (221) is closed by the carrying plate (210).

2. The 3D printer according to claim 1, wherein a binding nozzle (130) is arranged corresponding to the couple of tanks (100/100a), and the binding nozzle (130) is movable across an area defined by the tank opening (101a) for modeling.

3. The 3D printer according to claim 1 or 2, wherein the powder spreading mechanism (120) comprises a roller (121), and the roller (121) is able to move across an area defined by the respective tank openings (101/101a).

4. The 3D printer according to any of the claims 1 to 3, wherein a feeding hole (222) is defined on a top of the covering case (220).

5. The 3D printer according to any of the claims 1 to 4, wherein at least an elastic reset member is arranged on the covering case (220), and each movable latch (230) is linked with the corresponding elastic reset member so as to be moved by the corresponding elastic reset member and to be inserted into the corresponding insertion hole (211).

6. The 3D printer according to any of the claims 1 to 5, wherein the tank openings (101/101a) are arranged on the same horizontal plane.

7. The 3D printer according to any of the claims 1 to 6, further comprises another carrying plate (210a) arranged on the other elevating mechanism (110a).

8. The 3D printer according to claim 7, wherein the case opening (221) is of a shape corresponding to the respective carrying plates (210/210a).

9. The 3D printer according to claim 8, wherein the respective carrying plates (210/210a) are of the same shape.

10. The 3D printer according to any of the claims 7 to 9, wherein the respective carrying plates (210/210a) are of shapes different from each other, the transport assembly (200) further comprises another covering case (220a) having another case opening (221a), the respective case openings (221/221a) are of shapes corresponding to the respective carrying plates (210/210a).

## Patentansprüche

1. Ein 3D-Drucker mit:
zwei Tanks (100/100a), eine Tanköffnung (101/101a), die auf der Oberseite jedes Tanks (100/100a) definiert ist, und einen Hubmechanismus (110/110a), der in jedem Tank (100/100a) angeordnet und zwischen der Tanköffnung (101/101a) und einem Boden des entsprechenden Tanks (100/100a) beweglich ist;
einen Pulververteilmechanismus (120), der entsprechend den Tanköffnungen (101/101a) angeordnet und über einen durch die Tanköffnungen (101/101a) definierten Bereich beweglich ist, wobei einer der Tanks (100) Pulver (10) zur Pulverzufuhr (10) enthält und der Pulververteilmechanismus (120) die Pulver (10) für einen Modellierungsprozess in die Tanköffnung (101a) des anderen Tanks (100a) drückt; und
eine Transportanordnung (200), die eine Trägerplatte (210) umfasst, **dadurch gekennzeichnet, dass** die Transportanordnung (200) ferner ein Abdeckgehäuse (220) umfasst, wobei die Trägerplatte (210) abnehmbar am Hubmechanismus (110) im Tank (100) angeordnet ist, um das Pulver zuzuführen, wobei eine Vielzahl von Einführungslöchern (211) an einem Rand der Trägerplatte (210) definiert ist, wobei eine Gehäuseöffnung (221) an der Unterseite des Abdeckgehäuses (220) definiert ist, das Abdeckgehäuse (220) die entsprechende Tanköffnung (101) abdeckt und die Tanköffnung (101) mit der entsprechenden Gehäuseöffnung (221) in Verbindung steht, wobei die Gehäuseöffnung (221) eine der Trägerplatte (210) entsprechende Form aufweist, eine Vielzahl von beweglichen Verriegelungen (230), die geeignet sind, entsprechend in die jeweiligen Einführungslöcher (211) eingeführt zu werden, die an einem Rand der Öffnung des Gehäuses (221) angeordnet sind, und die Pulver (10) in dem Abdeckgehäuse (220) enthalten sein können, wenn die Öffnung des Gehäuses (221) durch die Trägerplatte (210) geschlossen ist.

2. 3D-Drucker nach Anspruch 1, wobei eine Anschlussdüse (130) entsprechend dem Tankpaar (100/100a) angeordnet ist und die Anschlussdüse (130) über einen durch die Tanköffnung (101a) definierten Bereich zur Modellierung beweglich ist.

3. 3D-Drucker nach Anspruch 1 oder 2, wobei der Pulververteilmechanismus (120) eine Walze (121) umfasst und die Walze (121) in der Lage ist, sich über einen durch die jeweiligen Tanköffnungen (101/101a) definierten Bereich zu bewegen.

4. 3D-Drucker nach einem der Ansprüche 1 bis 3, bei dem eine Zuführöffnung (222) auf einer Oberseite des Abdeckgehäuses (220) definiert ist.

5. 3D-Drucker nach einem der Ansprüche 1 bis 4, wobei mindestens ein elastisches Rückstellelement am Abdeckgehäuse (220) angeordnet ist und jedes bewegliche Schloss (230) mit dem entsprechenden elastischen Rückstellelement verbunden ist, um von dem entsprechenden elastischen Rückstellelement bewegt und in das entsprechende Einführungsloch (211) eingesetzt zu werden.

6. 3D-Drucker nach einem der Ansprüche 1 bis 5, bei dem die Tanköffnungen (101 / 101a) in der gleichen horizontalen Ebene angeordnet sind.

7. 3D-Drucker nach einem der Ansprüche 1 bis 6, ferner umfassend eine weitere Trägerplatte (210a), die auf dem anderen Hubmechanismus (110a) angeordnet ist.

8. 3D-Drucker nach Anspruch 7, wobei die Gehäuseöffnung (221) eine den jeweiligen Trägerplatten (210/210a) entsprechende Form aufweist.

9. 3D-Drucker nach Anspruch 8, bei dem die jeweiligen Trägerplatten (210/210a) die gleiche Form aufweisen.

10. 3D-Drucker nach einem der Ansprüche 7 bis 9, wobei die jeweiligen Trägerplatten (210/210a) unterschiedliche Formen voneinander aufweisen, wobei die Transportanordnung (200) ferner ein weiteres Abdeckgehäuse (220a) mit einer weiteren Gehäuseöffnung (221a) umfasst, wobei die jeweiligen Gehäuseöffnungen (221/221a) Formen aufweisen, die den jeweiligen Trägerplatten (210/210a) entsprechen.

## Revendications

1. Une imprimante 3D comprenant:
deux réservoirs (100/100a), une ouverture de réservoir (101/101a) définie sur le dessus de chaque réservoir (100/100a), et un mécanisme de levage (110/110a) disposé dans chaque réservoir (100/100a) et mobile entre l'ouverture du réservoir (101/101a) et un fond du réservoir correspondant (100/100a);
un mécanisme d'épandage de poudre (120) agencé en correspondance avec les ouvertures de réservoir (101/101a) et pouvant être déplacé sur une zone définie par les ouvertures de réservoir (101/101a), l'un des réservoirs (100) contenant des poudres (10) pour l'alimentation en poudres (10) et le mécanisme d'épandage de poudre (120) pousse les poudres (10) dans l'ouverture de réservoir (101a) de l'autre réservoir (100a) pour un processus de modélisation; et
un ensemble de transport (200) comprenant une plaque de support (210), **caractérisée en ce que** l'ensemble de transport (200) comporte en outre un boîtier de couverture (220), la plaque de support (210) étant agencée de manière amovible sur le mécanisme de levage (110) dans le réservoir (100) pour alimenter la poudre, une pluralité de trous d'insertion (211) étant définis sur un bord de la plaque de support (210), une ouverture de boîtier (221) étant définie au bas du boîtier de couverture (220), le boîtier de couverture (220) recouvrant l'ouverture du réservoir correspondant (101) et l'ouverture de réservoir (101) étant en communication avec l'ouverture de boîtier correspondante (221), l'ouverture de boîtier (221) ayant une forme correspondant à la plaque de support (210), une pluralité de loquets mobiles (230) étant destinés à être insérés de manière correspondante dans les trous d'insertion respectifs (211) agencés au niveau d'un bord de l'ouverture du boîtier (221), et les poudres (10) pouvant être contenues dans le boîtier de couverture (220) lorsque l'ouverture du boîtier (221) est obturée par la plaque de support (210).

2. L'imprimante 3D selon la revendication 1, dans laquelle une buse de liaison (130) est agencée en correspondance avec le couple de réservoirs (100/100a), et la buse de liaison (130) est mobile sur une zone définie par l'ouverture de réservoir (101a) pour la modélisation.

3. L'imprimante 3D selon la revendication 1 ou 2, dans laquelle le mécanisme d'épandage de poudre (120) comprend un rouleau (121), et le rouleau (121) est capable de se déplacer sur une zone définie par les ouvertures de réservoir respectives (101/101a).

4. L'imprimante 3D selon l'une quelconque des revendications 1 à 3, dans laquelle un trou d'alimentation (222) est défini sur un dessus du boîtier de couverture (220).

5. L'imprimante 3D selon l'une quelconque des revendications 1 à 4, dans laquelle au moins un élément de rappel élastique est disposé sur le boîtier de couverture (220), et chaque verrou mobile (230) est lié à l'élément de rappel élastique correspondant afin d'être déplacé par l'élément de rappel élastique correspondant et à insérer dans le trou d'insertion correspondant (211).

6. L'imprimante 3D selon l'une quelconque des revendications 1 à 5, dans laquelle les ouvertures de réservoir (101 / 101a) sont agencées sur le même plan horizontal.

7. L'imprimante 3D selon l'une quelconque des revendications 1 à 6, comprenant en outre une autre plaque de support (210a) agencée sur l'autre mécanisme d'élévation (110a).

8. L'imprimante 3D selon la revendication 7, dans laquelle l'ouverture de boîtier (221) a une forme correspondant aux plaques de support respectives (210/210a).

9. L'imprimante 3D selon la revendication 8, dans laquelle les plaques de support respectives (210/210a) ont la même forme.

10. L'imprimante 3D selon l'une quelconque des revendications 7 à 9, dans laquelle les plaques de support respectives (210/210a) ont des formes différentes les unes des autres, l'ensemble de transport (200) comprenant en outre un autre boîtier de couverture (220a) ayant une autre ouverture de boîtier (221a), les ouvertures de boîtier respectives (221/221a) ayant des formes correspondant aux plaques de support respectives (210/210a).
